# FASCICULE DE BREVET EUROPEEN

(11) **EP 3 642 003 B1**
(45) Date de publication et mention de la délivrance du brevet: **03.08.2022**
(21) Numéro de dépôt: 18749440.6
(22) Date de dépôt: 21.06.2018
(51) Int. Cl.: B29C 48/21, B29C 48/37, B29C 48/49, B29C 48/285

(54) **INSTALLATION ET PROCEDE DE COEXTRUSION**
ANLAGE UND VERFAHREN ZUR KOEXTRUSION
INSTALLATION AND METHOD FOR COEXTRUSION

(30) Priorité: 22.06.2017 FR 1755715
(43) Date de publication de la demande: 29.04.2020
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2018/051512
(87) Numéro de publication internationale: WO 2018/234711

(56) Documents cités:
- EP-A1- 0 062 017
- EP-A1- 0 642 913
- EP-A1- 2 607 037
- WO-A1-98/09792
- WO-A1-03/016012
- JP-A- S58 128 817
- US-A1- 2012 150 299
- US-A1- 2012 161 366

## Description

L'invention concerne le domaine de l'extrusion des mélanges de caoutchouc plus particulièrement destinés à la fabrication des pneumatiques. Plus particulièrement, elle concerne la fabrication de profilé coextrudé à base de mélanges de caoutchouc de différentes compositions utilisé notamment pour fabriquer une bande de roulement ou un flanc de pneumatique.

De manière connue, une installation de fabrication des profilés complexes par extrusion d'au moins deux mélanges de caoutchouc de compositions différentes, ou coextrusion, comprend au moins deux extrudeuses reliées à une tête d'extrusion. Chaque extrudeuse est formée d'un corps cylindrique ou fourreau qui est fixe à l'intérieur duquel se trouve une vis coaxiale à l'axe longitudinal du fourreau et entraînée en rotation autour de celui-ci. Elle a pour fonction d'homogénéiser et de pousser un mélange caoutchouteux vers un orifice ou de sortie après l'avoir reçu sous forme de bande de mélange à un orifice d'alimentation. Pour un produit complexe, l'orifice de sortie de chaque extrudeuse débouche dans une tête d'extrusion commune qui reçoit ainsi des mélanges de caoutchouc de compositions différentes et comprend en sortie une filière d'extrusion qui définit le profil de la bande de caoutchouc. Ce profil est défini par une lame profilée fixe ou une paroi profilée fixe coopérant avec un rouleau rotatif.

La fabrication de pneumatiques fait de plus en plus appel à l'utilisation de produits complexes obtenus sous forme de semi-finis complexés afin de diminuer le nombre de poses successives de produits en assemblage et de diminuer ainsi le coût et accroître la précision.

De nos jours, le nombre de mélanges caoutchouteux différents utilisés pour fabriquer un seul pneumatique a tendance à augmenter de manière à pouvoir augmenter les propriétés du pneumatique en fonction de la zone dans laquelle ces mélanges sont localisés. Ceci s'applique plus particulièrement dans le cas d'une bande de roulement de pneumatique qui comportait en général deux mélanges caoutchouteux différents, et on rajoute actuellement d'autres mélanges, par exemple un mélange électriquement conducteur et des mélanges destinés à recouvrir les flancs aux niveaux des épaules.

Lors d'une fabrication de profilé par coextrusion, on fait converger des mélanges de compositions différentes vers une filière de sortie ce qui fait qu'on réalise un collage à cru, en pression et en température des mélanges, sans contact à l'air libre et avant profilage. Ceci permet d'obtenir une bonne tenue du produit coextrudé au niveau des interfaces entre les mélanges. Or, de par le fait que les propriétés rhéologiques diffèrent d'un mélange à un autre, il est difficile de maîtriser parfaitement la géométrie de l'ensemble, en cause étant notamment la difficulté de positionnement d'un produit d'un certain mélange par rapport à un autre et son maintien dans le temps.

Le positionnement d'un produit par rapport à un autre est donné par un dispositif de profilage ou filière de sortie dans lequel arrivent les différents mélanges en provenance de différentes extrudeuses, sous forme d'extrudats qui ne se mélangent pas, afin de former le profilé complexe coextrudé en sortie. En pratique, la forme géométrique et les dimensions du dispositif de profilage sont déterminés par plusieurs boucles d'itération successives. Une fois le dispositif mis au point, il ne donne les résultats escomptés que lorsque les extrudeuses fonctionnent en régime continu et à une vitesse bien déterminée.

Le profilé coextrudé non-conforme représente actuellement une part non négligeable de la production de la machine. Plus les tirages sont courts dans l'optique d'une production flexible, plus les taux de chute sont élevés (5% à 20% en pratique). Il en résulte une baisse de la rentabilité de la machine. Par ailleurs, les pertes de matière étant économiquement inacceptables, les chutes dites mixtes (ou multi-composés) doivent être stockées, réhomogénéisées et réintroduites de façon maitrisée, précisément dosée, dans les productions suivantes. Le surcoût de fabrication que cela engendre s'accompagne, de surcroit, d'une baisse des performances du produit finalement obtenu qui est en partie pollué par les autres mélanges.

Par ailleurs, on doit contrôler le produit coextrudé en continu, en mesurant le poids linéaire du produit sortant et en le comparant à un poids préétabli. De plus, on évalue la forme et les dimensions du produit complexe (largeur, épaisseur) à l'aide de différents capteurs.

On connait ainsi le document WO 2015/028166 qui décrit une méthode de fabrication de bande de roulement pour pneumatique par coextrusion de mélanges différents en provenance de plusieurs extrudeuses agencées en parallèles, dans laquelle le profil transversal est analysé par des capteurs sans contact. Le profil de chaque partie constituant la bande est lu par un capteur, les profils étant analysés ensuite par une unité centrale de contrôle qui commande le fonctionnement de chaque extrudeuse. Le réglage du fonctionnement d'une extrudeuse se fait en ajustant la vitesse de rotation de la vis et la pression en bout de la vis, juste avant la sortie. Toutefois, son fonctionnement dépend également de la mise en régime thermique du mélange, de la mise en régime thermique de la filière, de la vitesse d'extrusion, de la rhéologie du mélange, de la perturbation de l'alimentation de la bande, etc. Tous ces facteurs perturbent le débit de l'extrudeuse, ce qui fait que de nombreux réglages sont nécessaires avant d'obtenir un produit conforme.

Par ailleurs, les mesures effectuées avec des capteurs optiques ne suffisent toutefois pas pour garantir le bon positionnement à l'intérieur d'un produit complexe de ses différents constituants, l'un par rapport à l'autre, ni de visualiser de leurs interfaces respectives, surtout quand ils sont superposés. De ce fait, une dernière vérification se fait par prélèvement d'échantillons. Les échantillons prélevés lors de toutes ces mises au point ne peuvent pas être recyclés car il s'agit d'un ensemble composite et ils sont jetés, ce qui génère des pertes de matière et augmente le coût global des produits obtenus.

On connait par ailleurs le document CN102173042 qui décrit un agencement de deux extrudeuses comportant chacune en sortie une pompe à engrenages pour réaliser un produit coextrudé à base de caoutchouc. Un tel agencement permet d'ajuster le débit du matériau débité par une extrudeuse en ajustant la vitesse de la pompe en sortie. L'inconvénient majeur d'une telle solution est l'encombrement important de la pompe à engrenage, ce qui impacte directement la taille de l'outillage de mise en forme, et ceci d'autant plus lorsque le nombre de voies et donc d'extrudeuses est supérieur à deux. Les outillages sont alors coûteux, difficiles à manipuler et la mise en régime thermique est plus longue. Par ailleurs, si, pour une question d'encombrement on réduisait le diamètre des engrenages de la pompe, cette dernière devrait alors, pour évacuer le matériau débité par l'extrudeuse, tourner à une vitesse élevée, ce qui aurait pour conséquence un échauffement du caoutchouc avec risque de vulcanisation précoce. EP 2 607 037 A1, JP S58 128817 A et WO 98/09792 A1 décrivent en outre des installations de coextrusion et des procédés de traitement du caoutchouc.

Un objectif de l'invention est de remédier aux inconvénients des documents précités.

Cet objectif est atteint par l'invention qui propose une installation de coextrusion pour produire un profilé coextrudé pour pneumatiques réalisé à base de mélanges de caoutchouc de compositions différentes comportant au moins une première extrudeuse comportant une vis ayant un axe longitudinal et au moins une deuxième extrudeuse comportant une vis ayant un axe longitudinal et une tête d'extrusion reliée à chacune desdites extrudeuses par des canaux appropriés, caractérisé en ce que l'entrée d'alimentation de chaque extrudeuse est reliée à l'orifice de refoulement d'une pompe à engrenages.

Autrement dit, on alimente chaque extrudeuse d'une installation de coextrusion avec un mélange d'élastomères directement en provenance d'une pompe à engrenages. On obtient ainsi une installation de coextrusion volumétrique, dans laquelle les sorties des différentes extrudeuses convergent vers une tête d'extrusion commune, les pompes à engrenages étant placées en amont de celle-ci. Et cela sans compromis quant au diamètre des engrenages de la pompe, ces engrenages étant dimensionnés de manière à assurer l'alimentation nécessaire au fonctionnement de l'extrudeuse, sans échauffement excessif du mélange d'élastomère.

De préférence, les axes des extrudeuses font un angle aigu entre eux.

Les axes longitudinaux des vis d'extrusion des extrudeuses sont agencés de manière à faire converger les mélanges qu'elles transportent vers la tête d'extrusion du profilé coextrudé. L'axe longitudinal d'une extrudeuse fait un angle aigu (inférieur à 90°) avec l'axe de l'extrudeuse adjacente. Le profilé coextrudé est obtenu ainsi obtenu par coextrusion des deux flux séparés de mélange, via des canaux d'écoulement qui relient l'orifice de sortie des extrudeuses à la tête d'extrusion. La tête d'extrusion est du type nez plat ou elle comporte une lame fixe profilée qui coopère avec un rouleau rotatif sur lequel est posé le produit coextrudé.

Avantageusement, ladite pompe à engrenages comprend deux pignons dont les axes de rotation sont parallèles à l'axe longitudinal de l'extrudeuse qu'elle alimente. Ceci permet d'utiliser une pompe à engrenages de construction simplifiée et d'encombrement réduit.

De préférence lesdits pignons sont des pignons à chevrons en V. Ceci permet de mieux canaliser le mélange entrant vers la partie centrale des pignons et de limiter le risque de fuites vers les paliers des pignons.

Avantageusement, la pompe à engrenages comporte un corps muni d'un orifice d'entrée d'un mélange d'élastomères et d'un orifice de refoulement du mélange.

De préférence, l'orifice d'entrée de la pompe à engrenages est alimenté en une bande de mélange d'élastomères. Il s'agit d'une alimentation directe, à froid, en bande d'élastomères pour une structure simplifiée de l'ensemble.

Avantageusement, l'orifice d'entrée de la pompe à engrenages est relié directement à l'orifice de sortie d'une extrudeuse d'alimentation en un mélange d'élastomères. On alimente ainsi chaque pompe à engrenages avec un mélange chaud, fluidifié, voire homogénéisé ce qui permet d'utiliser en sortie une extrudeuse dont la vis a seulement un rôle de transfert du mélange vers la tête d'extrusion. Cela permet de rendre plus compacte et moins chère la construction de la pompe à engrenages, tout en améliorant sa durée de vie.

De préférence, l'installation de l'invention comporte une unité de contrôle qui synchronise la vitesse de rotation de la vis avec la vitesse de rotation des engrenages de la pompe à engrenages.

Cela permet d'ajuster la quantité de travail à apporter au mélange dont le débit est fourni par la pompe à engrenages. Ainsi, la vitesse de la vis de l'extrudeuse est choisie proportionnellement à celle des engrenages de la pompe en fonction de la quantité de cisaillement que l'on veut apporter au mélange. Par exemple, une vitesse réduite de la vis apporte plus de cisaillement et d'échauffement au mélange, alors qu'une vitesse de la vis proche de celle des engrenages assure un transfert plus rapide du mélange vers la sortie de l'extrudeuse.

L'objectif de l'invention est également atteint avec un procédé de coextrusion pour produire un profilé coextrudé pour pneumatiques réalisé à base de mélanges de caoutchouc de compositions différentes comportant au moins une première extrudeuse comportant une vis ayant un axe longitudinal et au moins une deuxième extrudeuse comportant une vis ayant un axe longitudinal et une tête d'extrusion reliée à chacune desdites extrudeuses par des canaux appropriés, caractérisé en ce que on alimente chaque extrudeuse en mélange d'élastomères en provenance d'une pompe à engrenages.

Avantageusement, on synchronise la vitesse de rotation de la vis avec la vitesse de rotation des pignons de la pompe à engrenages.

L'invention sera mieux comprise grâce à la suite de la description, qui s'appuie sur les figures suivantes :
- la figure 1 est une vue en coupe axiale d'une installation selon un premier mode de réalisation de l'invention;
- la figure 2 est une vue en perspective partiellement en coupe de l'installation de la figure 1 ;
- les figures 3a et 3b illustrent par des vues en coupe et en perspective une variante préférée de réalisation d'une pompe à engrenages utilisée dans l'installation de l'invention ;
- la figure 4 est une vue en coupe axiale d'une installation selon un deuxième mode de réalisation de l'invention;
- la figure 5 est une vue en perspective partiellement en coupe de l'installation de la figure 4 ;
- les figures 6a à 6c illustrent des exemples d'installations de coextrusion de l'invention.

Sur les différentes figures, les éléments identiques ou similaires portent la même référence. Leur description n'est donc pas systématiquement reprise.

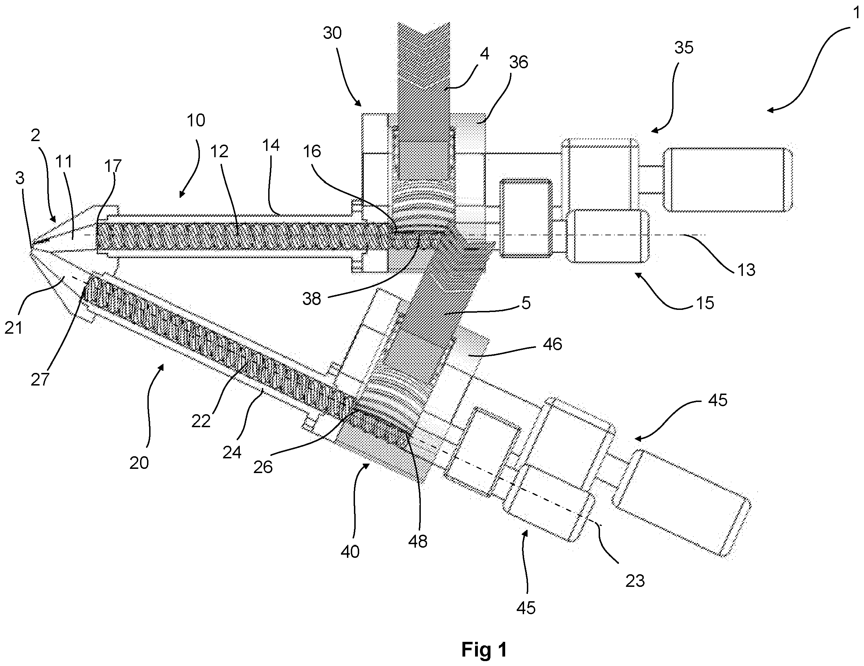

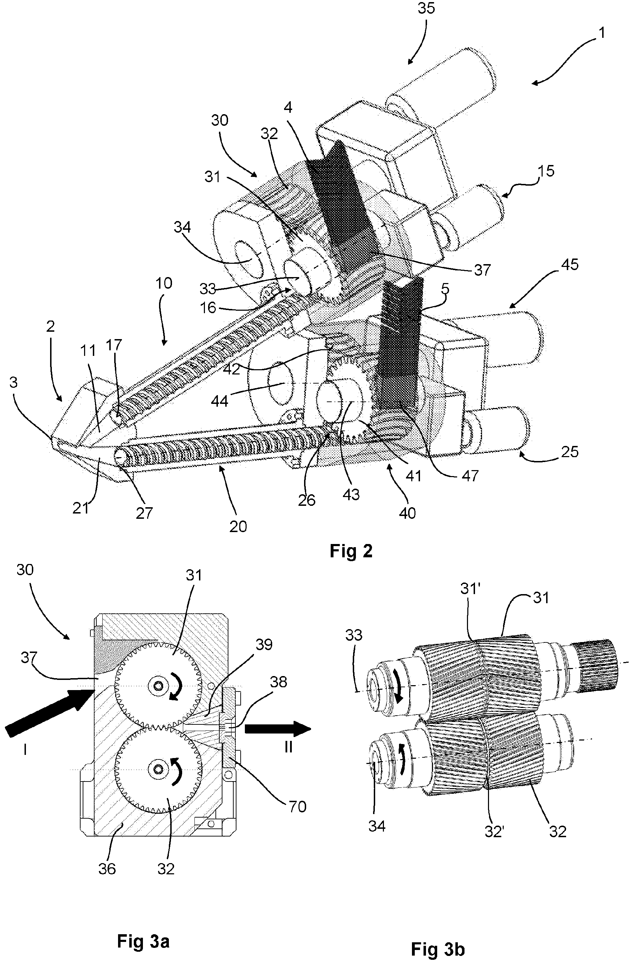

Les figures 1 et 2 illustrent une installation 1 de coextrusion selon un premier mode de réalisation de l'invention. La vue en coupe est réalisée avec un plan qui est parallèle au plan de symétrie d'une tête d'extrusion 2. L'installation comprend deux extrudeuses 10 et 20 qui débitent chacune dans un canal 11 respectivement 21 de la tête d'extrusion 2.

L'extrudeuse 10 comprend une vis d'extrusion 12 ou vis d'Archimède et un fourreau 14 de réception de la vis ainsi qu'un motoréducteur 15 d'entraînement en rotation de la vis 12 autour de son axe longitudinal 13. Le fourreau 14 comporte une entrée d'alimentation 16 en mélange d'élastomères et une sortie 17 qui débouche dans le canal 11. L'extrudeuse 20 comprend une vis d'extrusion 22 ou vis d'Archimède et un fourreau 24 de réception de la vis ainsi qu'un motoréducteur 25 d'entraînement en rotation de la vis 22 autour de son axe longitudinal 23. Le fourreau 24 comporte une entrée d'alimentation 26 en mélange d'élastomères et une sortie 27 qui débouche dans le canal 21. Les axes longitudinaux 13 et 23 convergent vers la tête d'extrusion 2 et se trouvent dans l'axe de symétrie de celle-ci.

Par gomme, caoutchouc ou élastomère, on entend de préférence tout type d'élastomère, diénique ou non diénique par exemple thermoplastique, ou un mélange d'élastomères : caoutchouc naturel et caoutchouc synthétique, de charges renforçantes : noir de carbone et silice, de plastifiants : huiles, résines, et d'autres éléments chimiques comme le soufre par exemple. L'installation d'extrusion de l'invention vise à réaliser un profilé coextrudé à base de mélanges différents. De tels mélanges d'élastomères différents sont, à titre d'exemple les mélanges élastomères ou de gomme utilisés pour créer un ensemble de bande de roulement tels : un premier matériau en caoutchouc naturel à 100% pour réaliser une sous-couche avec un, puis un deuxième matériau pour réaliser la bande de roulement en caoutchouc synthétique à 100%. On peut rajouter un troisième, voire un quatrième matériau pour réaliser les flancs composé d'un mélange de caoutchouc naturel/ caoutchouc synthétique (20% à 80% de caoutchouc naturel).

Selon l'invention, chaque extrudeuse 10, 20 est alimentée par une pompe à engrenages 30, respectivement 40. La pompe à engrenages 30 comprend une entrée d'alimentation 37 en un premier mélange d'élastomères et une sortie de refoulement 38 reliée de manière étanche à l'entrée d'alimentation 16 de l'extrudeuse 10. La pompe à engrenages 40 comprend une entrée d'alimentation 47 en un deuxième mélange d'élastomères et une sortie de refoulement 48 reliée de manière étanche à l'entrée d'alimentation 26 de l'extrudeuse 20.

Dans l'exemple illustré aux figures 1 et 2, l'alimentation de la pompe 30 se fait à l'aide d'une bande 4 et celle de la pompe 40 se fait à partir d'une bande 5 de mélange d'élastomères, les bandes 4 et 5 étant à la température ambiante. Dans une variante non représentée aux dessins, on muni la pompe à engrenages 30, 40 de pignons d'entraînement de la bande de mélange 4, 5 à l'intérieur de la pompe, ces pignons d'entraînement étant placés, de manière connue de l'homme du métier, avant l'orifice d'entrée 37, 47 de chaque pompe.

Chaque pompe à engrenages 30 et 40 comprend deux pignons cylindriques 31, 32, respectivement 41, 42 d'axes 33, 34, respectivement 43,44 parallèles entre eux et parallèles à l'axe longitudinal 13, respectivement 23, de la vis d'extrusion 12, respectivement de la vis d'extrusion 22. Le pignon 31 est entraîné en rotation par un motoréducteur 35 autour de son axe 33 et le pignon 32 est entraîné par le pignon 31 en rotation autour de son axe 34. De manière similaire, le pignon 41 est entraîné en rotation par un motoréducteur 45 autour de son axe 43 et le pignon 42 est entraîné en rotation par le pignon 41 autour de son axe 44. Les pignons 31 et 32 sont logés dans un carter 36 de la pompe. Les pignons 41, 42 sont logés dans un carter 46 de la pompe.

Dans une variante de réalisation de l'invention, les pignons 31,32 et 41,42 ont une denture droite. Dans une autre variante de réalisation, tel que mieux visible à la fig. 3b, tous les pignons 31, 32 et 41, 42 sont du type à chevrons en V.

On va expliquer le fonctionnement d'une pompe à engrenages 30 de l'invention en référence aux figures 3a et 3b. Le mélange d'élastomères entre dans la pompe 30 dans le sens de la flèche I par l'ouverture d'entrée 37 qui présente une section en entonnoir afin de permettre de bien remplir les dentures du pignon 31 en mélange. Le mélange est transporté par les dents du pignon 31 jusque dans une zone de compression dans laquelle les dents des pignons 31 s'engrènent avec les dents du pignon 32. Sous l'effet de la pression exercée par les dents de l'engrenage, le mélange comprimé est envoyé dans une voûte 39 et sort de la pompe dans la direction indiquée par la flèche II.

Dans la variante de la fig. 3a, la pompe est montée moyennant une bride 70 sur le fourreau 14 de l'extrudeuse 10 de manière à faire correspondre la sortie de refoulement 38 de la pompe 30 avec l'entrée d'alimentation 16 de l'extrudeuse 10.

Dans une autre variante (fig. 1 et 2), la vis 12, 22 de l'extrudeuse 10, 20 traverse le carter 36, 46 de la pompe à engrenages 30, 40 et l'extrémité amont du fourreau 14, 24 est fixée sur la face latérale du même carter.

Dans une réalisation avantageuse, on préfère doter la pompe 30 avec des pignons 31 et 32 du type à chevrons en V, tel que visible à la figure 3b. L'orientation des chevrons est telle qu'elle canalise le flux de matériau élastomèrique vers le centre 31', 32' de chaque pignon 31, 32 et permet de diminuer la pression sur les bords des pignons. Ceci permet d'assurer une construction étanche du corps de pompe au niveau des paliers latéraux de support des axes des pignons avec des simples joints d'étanchéité et donc une construction mécanique simple et peu coûteuse de la pompe à engrenages. La pompe à engrenages 40 comporte dans cette variante, des pignons à chevrons et une construction similaire à celle de la pompe 30.

En fonctionnement, l'alimentation en continu de la pompe à engrenages 30, 40 permet de remplir les dentures des pignons moteurs et fournit un débit de matériau en sortie qui est constant et mesurable. La vitesse de rotation de la vis 12, 22 de chaque extrudeuse 10, 20 est commandée en synchronisme avec celle des engrenages de la pompe dédiée et en fonction des propriétés rhéologiques du mélange qu'elle transporte. On obtient ainsi une extrusion volumétrique en sortie de chaque extrudeuse, le débit du matériau étant constant et le matériau ayant subi plus ou moins de cisaillement entre l'entrée d'alimentation 16, 26 et la sortie 17, 27 de chaque extrudeuse 10, 20. Les extrudats qui arrivent en sortie de chaque extrudeuse sont envoyés sous pression et sans se mélanger dans les canaux 11, 12 de la filière 2 pour obtenir ainsi un profilé coextrudé.

Le mélange d'élastomères qui traverse l'extrudeuse 10 est différent (on comprend qu'il a des propriétés physico-chimiques différentes) de celui de l'extrudeuse 20. Lors de la mise en rotation des vis 12 et 22, on fait converger les deux mélanges via les canaux 11 et 21 vers une filière de sortie 3 de la tête d'extrusion 2 en réalisant ainsi un collage à cru, en pression et en température des deux mélanges, sans contact à l'air libre et avant profilage. Ceci permet d'obtenir une bonne tenue du produit coextrudé au niveau des interfaces entre les mélanges et une géométrie constante de l'ensemble formant le produit profilé coextrudé.

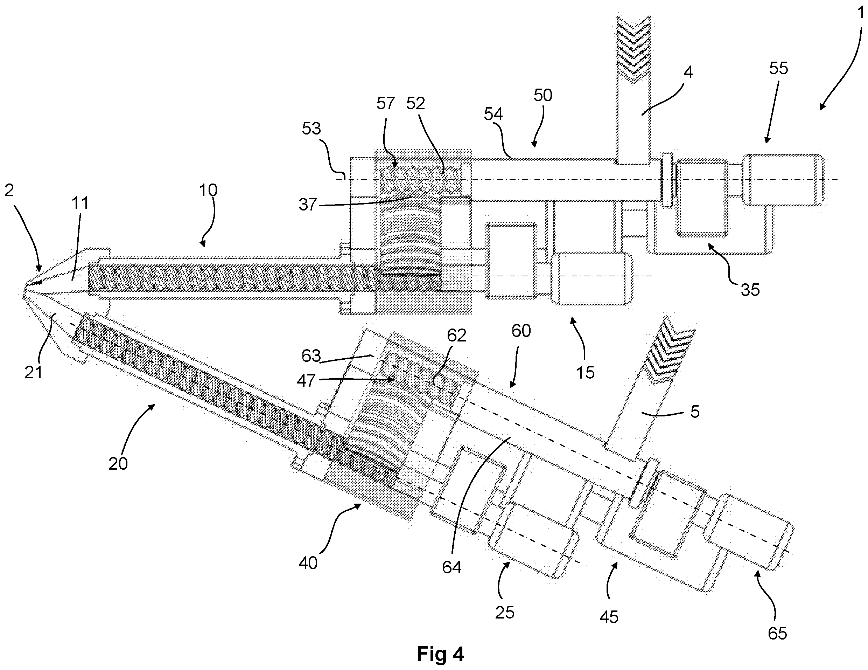

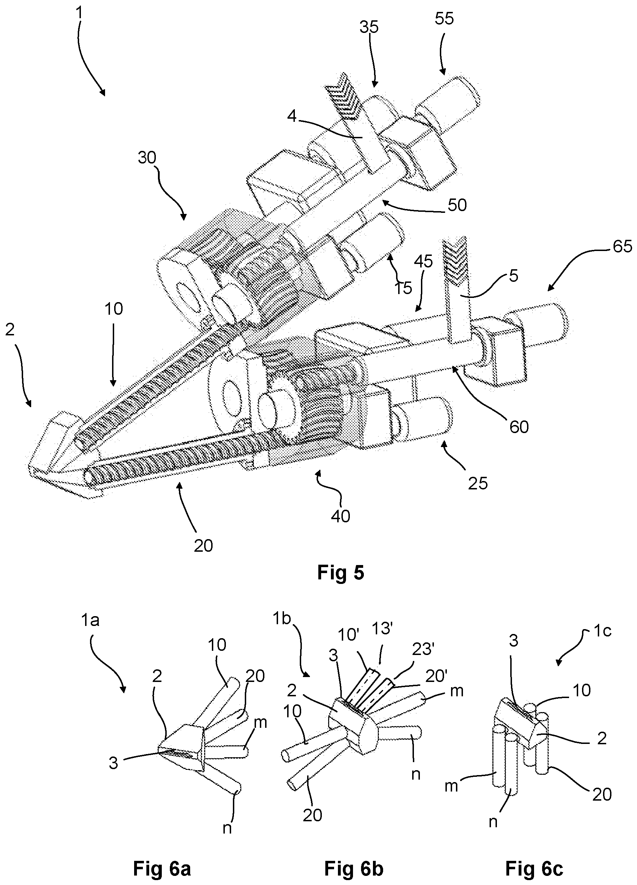

Les figures 4 et 5 illustrent une installation 1 de coextrusion selon un deuxième mode de réalisation de l'invention. La vue en coupe est réalisée avec un plan qui est parallèle au plan de symétrie de la tête d'extrusion 2. L'installation 1 des figures 4 et 5 comprend une première extrudeuse 10 et une deuxième extrudeuse 20 alimentées chacune par une pompe à engrenages 30, respectivement 40 dont la structure et le fonctionnement sont similaires à ce qui a été précédemment décrit. Selon ce mode de réalisation, chaque pompe à engrenages 30, 40 est alimentée par une extrudeuse d'alimentation 50, respectivement 60.

L'extrudeuse d'alimentation 50 comprend une vis d'extrusion 52 ou vis d'Archimède et un fourreau 54 de réception de la vis ainsi qu'un motoréducteur 55 d'entraînement en rotation de la vis 52 autour de son axe longitudinal 53. Le fourreau 54 comporte une entrée d'alimentation 56 en mélange d'élastomères sous forme d'une bande 4, et une sortie 57 qui débouche de manière étanche dans l'orifice d'entrée 37 de la pompe à engrenages 30.

L'extrudeuse d'alimentation 60 comprend une vis d'extrusion 62 ou vis d'Archimède et un fourreau 64 de réception de la vis ainsi qu'un motoréducteur 65 d'entraînement en rotation de la vis 62 autour de son axe longitudinal 63. Le fourreau 64 comporte une entrée d'alimentation 66 en mélange d'élastomères sous forme d'une bande 5 et une sortie 67 qui débouche de manière étanche dans l'orifice d'entrée 47 de la pompe à engrenages 40.

Dans une réalisation avantageuse, l'axe longitudinal 53 est parallèle aux axes 33, 34 des pignons 31, 32 et l'axe longitudinal 53 est parallèle aux axes 43, 44 des pignons 41, 42, pour une installation 1 d'encombrement optimisé . Dans une autre réalisation, on agence les extrudeuses d'alimentation 50, 60 de manière tangentielle à l'entrée dans la pompe à engrenages (leurs axes 53, 63 étant perpendiculaires ou inclinés par rapport aux axes des pignons de la pompe à engrenages 30, 40).

Selon ce mode de réalisation, chaque pompe 30, 40 reçoit une alimentation en un mélange élastomère déjà travaillé, fluidifié et mis en température. On alimente ainsi la pompe à engrenages 30, 40 avec un mélange plus fluide, ce qui permet de limiter l'effort sur les paliers ainsi que l'usure des dents des engrenages et augmente la durée de vie de la pompe. De surcroît, une alimentation en mélange fluidifié demande moins de couple et donc moins de puissance installée à la pompe à engrenages qui peut, de ce fait être d'une construction plus compacte et d'un coût moindre. La construction des extrudeuses 10 et 20 peut être simplifiée dans ce cas, leur vis servant principalement au transfert du mélange d'élastomère dont le débit est bien dosé par la pompe et constant, vers la tête d'extrusion 2.

Les figures 6a à 6c illustrent des exemples d'installations de coextrusion selon l'invention utilisant plusieurs extrudeuses qui débitent dans une tête d'extrusion d'un produit complexe coextrudé.

L'installation la de la figure 6a illustre un agencement de plusieurs extrudeuses disposées toutes dans le plan de symétrie de la tête d'extrusion 2. Chaque extrudeuse 10, 20, m, n est une extrudeuse volumétrique qui est alimentée en mélange par une pompe à engrenages dédiée, comme précédemment décrit.

L'installation 1b de la figure 6b illustre un agencement de plusieurs extrudeuses disposées de part et d'autre du plan de symétrie de la tête d'extrusion 2. Chaque extrudeuse 10, 20, m, n est une extrudeuse volumétrique qui est alimentée en mélange par une pompe à engrenages dédiée, comme précédemment décrit.

L'installation 1c de la figure 6c illustre un agencement de plusieurs extrudeuses disposées côte-à-côte et de part et d'autre du plan de symétrie de la tête d'extrusion 2. Chaque extrudeuse 10, 20, m, n est une extrudeuse volumétrique qui est alimentée en mélange par une pompe à engrenages dédiée, comme précédemment décrit.

Dans une autre variante, non illustrée aux figures, on agence au moins deux extrudeuses supplémentaires 10', 20' avec les axes longitudinaux 13', 23' dans un même plan qui coupe le plan de symétrie de la tête d'extrusion 2. On s'arrange pour que les deux extrudeuses 10', 20' débitent dans des canaux d'écoulement qui se trouvent dans le plan défini par les axes 13', 23' pour un encombrement optimisé des extrudeuses. Cette variante illustrée sur la figure 6b s'applique également en combinaison avec les agencements illustrés aux figures 6a et 6c.

Dans une variante, au moins deux des extrudeuses 10, 20, m, n débitent un même mélange d'élastomères (de même composition).

L'installation comprend une unité de contrôle qui est apte à ajuster la vitesse de rotation des vis 12,22 des extrudeuses 10, 20 et celle des pignons moteurs 31, 41 des pompes à engrenages 30, 40, notamment en fonction de dimensions du profilé coextrudé et des propriétés rhéologiques des matériaux transportés.

L'unité de contrôle actionne, en fonction des dimensions souhaitées du profilé coextrudé ou en fonction du régime de fonctionnement (vitesse variable, conditions de marche et arrêt) la vitesse des motoréducteurs 15, 25, 35, 45. La vitesse de rotation des pignons moteurs 31, 41 des pompes 30, 40 est directement proportionnelle avec la variation du débit. Ceci permet à l'unité de commande d'ajuster le débit de chaque extrudeuse 10, 20 en fonction de dimensions du produit coextrudé et également de le maintenir constant en fonctionnement.

Dans une variante, les dimensions du profilé coextrudé, notamment la largeur et l'épaisseur, sont préétablies et mesurées à l'aide d'un capteur optique situé en sortie de la tête d'extrusion 2. Le capteur vérifie les dimensions du profilé coextrudé et sa conformité avec des dimensions préétablies en étant est relié à l'unité de contrôle. Dans une variante, un capteur de poids mesure le poids du profilé coextrudé et est relié à l'unité de contrôle qui ajuste ainsi de manière encore plus fine les tolérances du produit coextrudé.

Dans une autre variante, l'unité de contrôle est également reliée aux moyens de tirage de la bande de profilé coextrudé pour en ajuster la vitesse.

D'autres variantes et modes de réalisation de l'invention peuvent être envisagés sans sortir du cadre de ses revendications.

Ainsi, dans une variante plus économique, un seul ensemble motoréducteur est utilisé pour entraîner en rotation en même temps la vis et les axes des pignons de la pompe à engrenages située en amont de celle-ci. Dans une variante encore plus économique, un seul motoréducteur entraîne en rotation la vis de l'extrudeuse d'alimentation, les pignons de la pompe à engrenages et la vis d'extrusion de l'extrudeuse qui transfère le mélange dans la tête d'extrusion.

Dans une autre variante, les pompes 30 et 40 sont de construction différente l'une par rapport à l'autre ou elles ont une même construction, mais un dimensionnement différent de leurs composants respectifs (par exemple le diamètre des pignons est différent d'une pompe à l'autre).

## Revendications

1. Installation de coextrusion pour produire un profilé coextrudé pour pneumatiques réalisé à base de mélanges de caoutchouc de compositions différentes comportant au moins une première extrudeuse (10) comportant une vis (12) ayant un axe longitudinal (13) et au moins une deuxième extrudeuse (20) comportant une vis (22) ayant un axe longitudinal (23) et une tête d'extrusion (2) reliée à chacune desdites extrudeuses (10, 20) par des canaux (11,21) appropriés, **caractérisé en ce que** l'entrée d'alimentation (16, 26) de chaque extrudeuse (10, 20) est reliée à l'orifice de refoulement (38, 48) d'une pompe à engrenages (30, 40).

2. Installation (1) selon la revendication 1, **caractérisée en ce que** les axes (13, 23) des extrudeuses (10, 20) font un angle aigu entre eux.

3. Installation selon l'une des revendications précédentes, **caractérisée en ce que** ladite pompe à engrenages (30 ; 40) comprend deux pignons (31, 32 ; 41, 42) dont les axes de rotation (33, 34 ; 43, 44) sont parallèles à l'axe longitudinal (13 ; 23) de l'extrudeuse (10 ; 20) qu'elle alimente.

4. Installation selon la revendication 3, **caractérisée en ce que** lesdits pignons (31,32 ; 41, 42) sont des pignons à chevrons en V.

5. Installation selon l'une des revendications précédentes, **caractérisé en ce que** la pompe à engrenages (30, 40) comporte un corps (36, 46) muni d'un orifice d'entrée (37, 47) d'un mélange d'élastomères et d'un orifice de refoulement (38, 48) du mélange.

6. Installation selon la revendication 5, **caractérisée en ce que** l'orifice d'entrée (37, 47) de la pompe à engrenages (30, 40) est alimenté en une bande de mélange d'élastomères (4, 5).

7. Installation selon la revendication 5, **caractérisée en ce que** l'orifice d'entrée (37, 47) de la pompe à engrenages est relié directement à l'orifice de sortie (57, 67) d'une extrudeuse d'alimentation (50, 60) en un mélange d'élastomères.

8. Installation selon l'une des revendications 1 à 7, **caractérisée en ce qu'**elle comporte une unité de contrôle qui synchronise la vitesse de rotation de la vis (12, 22) avec la vitesse de rotation des engrenages de la pompe à engrenages (30, 40).

9. Procédé de coextrusion pour produire un profilé coextrudé pour pneumatiques réalisé à base de mélanges de caoutchouc de compositions différentes comportant au moins une première extrudeuse (10) comportant une vis (12) ayant un axe longitudinal (13) et au moins une deuxième extrudeuse (20) comportant une vis (22) ayant un axe longitudinal (23) et une tête d'extrusion (2) reliée à chacune desdites extrudeuses par des canaux (11, 21) appropriés, **caractérisé en ce que** on alimente chaque extrudeuse (10, 20) en mélange d'élastomères en provenance d'une pompe à engrenages (30, 40).

10. Procédé selon la revendication 9, **caractérisé en ce qu'**on synchronise la vitesse de rotation de la vis (12, 22) avec la vitesse de rotation des pignons de la pompe à engrenages (30, 40).

## Patentansprüche

1. Koextrusionsanlage zur Herstellung eines koextrudierten Profils für Reifen, das aus Kautschukgemischen mit unterschiedlichen Zusammensetzungen hergestellt ist, aufweisend mindestens einen ersten Extruder (10), der eine Schnecke (12) mit einer Längsachse (13) aufweist, und mindestens einen zweiten Extruder (20), der eine Schnecke (22) mit einer Längsachse (23) aufweist, und einen Extruderkopf (2), der mit jedem der Extruder (10, 20) über entsprechende Kanäle (11, 21) verbunden ist, **dadurch gekennzeichnet, dass** der Einzug (16, 26) jedes Extruders (10, 20) mit der Auslassöffnung (38, 48) einer Zahnradpumpe (30, 40) verbunden ist.

2. Anlage (1) nach Anspruch 1, **dadurch gekennzeichnet, dass** die Achsen (13, 23) der Extruder (10, 20) zwischen sich einen spitzen Winkel einschließen.

3. Anlage nach einem der vorhergehenden Ansprüche, **dadurch gekennzeichnet, dass** die Zahnradpumpe (30; 40) zwei Zahnräder (31, 32; 41, 42) umfasst, deren Rotationsachsen (33, 34; 43, 44) parallel zu der Längsachse (13; 23) des Extruders (10; 20) verlaufen, den sie speist.

4. Anlage nach Anspruch 3, **dadurch gekennzeichnet, dass** die Zahnräder (31, 32; 41, 42) V-förmige Pfeilzahnräder sind.

5. Anlage nach einem der vorhergehenden Ansprüche, **dadurch gekennzeichnet, dass** die Zahnradpumpe (30, 40) einen Körper (36, 46) aufweist, der mit einer Eingangsöffnung (37, 47) für ein Elastomergemisch und mit einer Auslassöffnung (38, 48) für das Gemisch versehen ist.

6. Anlage nach Anspruch 5, **dadurch gekennzeichnet, dass** die Eingangsöffnung (37, 47) der Zahnradpumpe (30, 40) mit einem Elastomergemischband (4, 5) gespeist wird.

7. Anlage nach Anspruch 5, **dadurch gekennzeichnet, dass** die Eingangsöffnung (37, 47) der Zahnradpumpe direkt mit der Ausgangsöffnung (57, 67) eines Speiseextruders (50, 60) zum Speisen mit einem Elastomergemisch verbunden ist.

8. Anlage nach einem der Ansprüche 1 bis 7, **dadurch gekennzeichnet, dass** sie eine Steuereinheit aufweist, die die Rotationsgeschwindigkeit der Schnecke (12, 22) mit der Rotationsgeschwindigkeit des Rädersatzes der Zahnradpumpe (30, 40) synchronisiert.

9. Koextrusionsverfahren zur Herstellung eines koextrudierten Profils für Reifen, das aus Kautschukgemischen mit unterschiedlichen Zusammensetzungen hergestellt ist, aufweisend mindestens einen ersten Extruder (10), der eine Schnecke (12) mit einer Längsachse (13) aufweist, und mindestens einen zweiten Extruder (20), der eine Schnecke (22) mit einer Längsachse (23) aufweist, und einen Extruderkopf (2), der mit jedem der Extruder über entsprechende Kanäle (11, 21) verbunden ist, **dadurch gekennzeichnet, dass** jeder Extruder (10, 20) mit Elastomergemisch von einer Zahnradpumpe (30, 40) gespeist wird.

10. Verfahren nach Anspruch 9, **dadurch gekennzeichnet, dass** die Rotationsgeschwindigkeit der Schnecke (12, 22) mit der Rotationsgeschwindigkeit der Zahnräder der Zahnradpumpe (30, 40) synchronisiert wird.

## Claims

1. Coextrusion installation for producing a coextruded profiled element for tyres that is made from rubber compounds of different compositions, having at least one first extruder (10) having a screw (12) with a longitudinal axis (13), and at least one second extruder (20) having a screw (22) with a longitudinal axis (23), and an extrusion head (2) connected to each of said extruders (10, 20) by appropriate ducts (11, 21), **characterized in that** the feed inlet (16, 26) of each extruder (10, 20) is connected to the delivery orifice (38, 48) of a gear pump (30, 40).

2. Installation (1) according to Claim 1, **characterized in that** the axes (13, 23) of the extruders (10, 20) make an acute angle between one another.

3. Installation according to either of the preceding claims, **characterized in that** said gear pump (30; 40) comprises two pinions (31, 32; 41, 42), the axes of rotation (33, 34; 43, 44) of which are parallel to the longitudinal axis (13; 23) of the extruder (10; 20) that it feeds.

4. Installation according to Claim 3, **characterized in that** said pinions (31, 32; 41, 42) are herringbone pinions.

5. Installation according to one of the preceding claims, **characterized in that** the gear pump (30, 40) has a body (36, 46) provided with an inlet orifice (37, 47) for an elastomer compound and with a delivery orifice (38, 48) for the compound.

6. Installation according to Claim 5, **characterized in that** the inlet orifice (37, 47) of the gear pump (30, 40) is fed with an elastomer compound strip (4, 5).

7. Installation according to Claim 5, **characterized in that** the inlet orifice (37, 47) of the gear pump is connected directly to the outlet orifice (57, 67) of a feed extruder (50, 60) for feeding an elastomer compound.

8. Installation according to one of Claims 1 to 7, **characterized in that** it has a control unit that synchronizes the speed of rotation of the screw (12, 22) with the speed of rotation of the gears of the gear pump (30, 40).

9. Coextrusion method for producing a coextruded profiled element for tyres that is made from rubber compounds of different compositions, having at least one first extruder (10) having a screw (12) with a longitudinal axis (13), and at least one second extruder (20) having a screw (22) with a longitudinal axis (23), and an extrusion head (2) connected to each of said extruders by appropriate ducts (11, 21), **characterized in that** each extruder (10, 20) is fed with an elastomer compound coming from a gear pump (30, 40).

10. Method according to Claim 9, **characterized in that** the speed of rotation of the screw (12, 22) is synchronized with the speed of rotation of the pinions of the gear pump (30, 40).
